# FASCICULE DE BREVET EUROPEEN

(11) **EP 0 527 673 B1**
(45) Date de publication et mention de la délivrance du brevet: **07.06.1995**
(21) Numéro de dépôt: 92402234.6
(22) Date de dépôt: 05.08.1992
(51) Int. Cl.: G01D 5/20

(54) **Capteur réluctant homopolaire**
Homopolarer veränderlicher Reluktanzgeber
Homopolar variable reluctance sensor

(30) Priorité: 09.08.1991 FR 9110174
(43) Date de publication de la demande: 17.02.1993
(73) Titulaire: GEC ALSTHOM SA, 75116 Paris (FR)
(72) Inventeur: Maestre, Jean-François, F-21000 Dijon (FR)
(74) Mandataire: Fournier, Michel

(56) Documents cités:
- EP-A- 0 210 927
- EP-A- 0 401 084
- FR-A- 2 637 683
- PATENT ABSTRACTS OF JAPAN vol. 9, no. 163 (P-371) 9 juillet 1985 & JP-A-60 042 603

## Description

La présente invention est relative à capteur réluctant homopolaire destiné à la mesure de la position d'un rotor par rapport à un stator.

L'invention trouve une application particulièrement intéressante, mais non exclusive, dans le domaine de la commande des moteurs électriques.

La Demanderesse a décrit, dans le brevet français n° 88 13 272 (FR-A- 2637683), un dispositif pour la mesure de l'angle de rotation d'un rotor de moteur par rapport à son stator, comprenant 2n capteurs magnétiques disposés selon une circonférence fixe par rapport au stator, n étant le nombre de phases du moteur, chaque capteur comprenant un circuit magnétique muni d'une bobine émettrice et d'une bobine réceptrice, les capteurs étant groupés deux par deux, les capteurs d'un même groupe étant décalés de 180 degrés électriques, les groupes étant régulièrement décalés les uns par rapport aux autres d'un angle géométrique égal à k.360/2p, où k est un nombre arbitraire et p le nombre de paires de pôles du moteur, les bobines émettrices étant toutes reliées en série et alimentées par une tension alternative de fréquence comprise entre 2 et 15 kHz, les bobines réceptrices d'un même groupe de capteurs étant connectées en série, l'enveloppe des signaux aux bornes de ces ensembles de bobines réceptrices représentant, à un déphasage près, l'image de la mesure de l'angle de rotation dudit rotor.

Un mode de réalisation du capteur précité a été décrit en détail dans le certificat d'addition français n° 89 10 533 (FR-A- 2650666).

Un tel capteur fonctionne bien, mais il est de réalisation relativement onéreuse, en particulier pour les capteurs utilisés pour les moteurs à faible nombre de pôles (au-dessous de six pôles par exemple).

Un but de la présente invention est de réaliser un capteur de prix de revient abaissé, en particulier pour les capteurs utilisés pour le pilotage des moteurs à faible nombre de pôles, tout en conservant la même précision et la même sûreté de fonctionnement.

L'invention a pour objet un capteur réluctant homopolaire caractérisé en ce qu'il comprend un rotor en matériau magnétique comprenant un corps cylindrique muni à une première extrémité d'une partie feuilletée comprenant autant de lobes qu'il y a de paires de pôles au capteur, et à une seconde extrémité d'une couronne, et un stator en matériau magnétique comprenant une portion cylindrique muni d'un bobinage d'excitation alimentée par une tension ou un courant alternatif, le stator comprenant en outre une première couronne, munie d'encoches, ladite première couronne définissant avec ladite partie feuilletée un premier entrefer, le stator comprenant une seconde couronne lisse définissant avec la couronne rotorique un second entrefer, les encoches statoriques étant munies d'un enroulement choisi pour que la tension qui y est induite soit sinusoïdale et exempte d'harmoniques, l'enveloppe de cette tension représentant, à un déphasage près, l'image de la position du rotor par rapport au stator.

Dans un exemple de réalisation, l'enroulement statorique comprend deux bobinages formant deux phases déphasées de 90 degrés électriques, chacune de ces phases étant réalisée de manière que le nombre de conducteurs d'une même phase varie dans les encoches de la façon la plus sinusoïdale possible en fonction de l'angle électrique, afin de diminuer les coefficients de bobinage des harmoniques.

L'invention sera bien comprise par la description ci-après d'un exemple de réalisation, en référence au dessin annexé dans lequel:

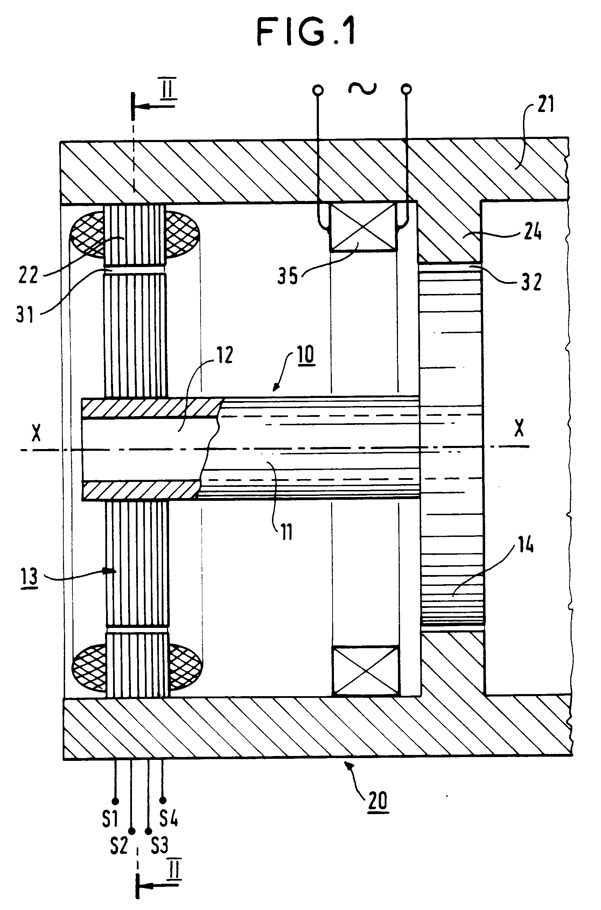

- la figure 1 est une vue schématique en coupe axiale d'un capteur selon l'invention,

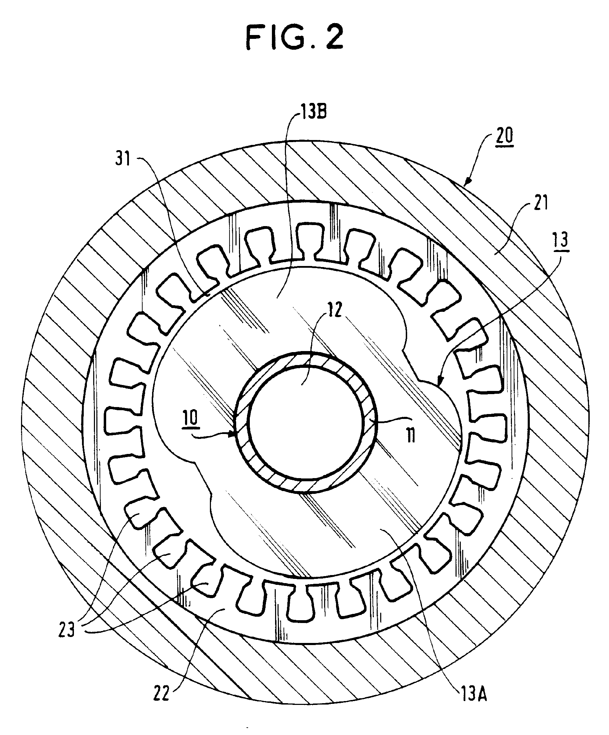

- la figure 2 est une vue en coupe selon la ligne II-II de la figure 1,
- la figure 3 est une vue schématique de l'enroulement du stator,
- la figure 4 est un diagramme du signal de sortie du capteur.

L'exemple de mise en oeuvre de l'invention décrit en détail ci-après est celui d'un capteur diphasé à deux paires de pôles.

Le capteur de l'invention est de révolution autour d'un axe xx qui se confond avec celui du moteur qu'il pilote. La capteur comporte un rotor et un stator, tous les deux réalisés en matériau magnétique.

Le rotor, désigné dans son ensemble par la référence 10, comporte un corps cylindrique 11 muni d'un alésage axial 12 permettant son positionnement sur l'arbre du moteur à piloter; le rotor comporte, à une première extrémité du corps, une partie en tôle feuilletée 13 comprenant des lobes 13A et 13B, plus généralement autant de lobes qu'il y a de paires de pôles dans le capteur. Ces lobes sont conformés pour que le signal induit dans le stator soit le plus sinusoïdal possible. Le rotor possède, à l'autre extrémité du corps 12, une couronne 14 circulaire.

Le stator est désigné dans son ensemble par la référence 20. Il comprend une partie cylindrique 21 munie de moyens non représentés pour sa fixation au stator du moteur à piloter. Une première couronne 22, munie d'encoches 23, définit avec la portion 13 du rotor un premier entrefer 31. Dans l'exemple choisi, le nombre d'encoches est de 24.

Le stator comporte une seconde couronne 24, définissant avec la couronne rotorique 14 un entrefer 32.

La portion cylindrique 21 du stator est munie d'un bobinage d'excitation 35, alimentée par une tension alternative de fréquence comprise entre 1 et 20 kHz.

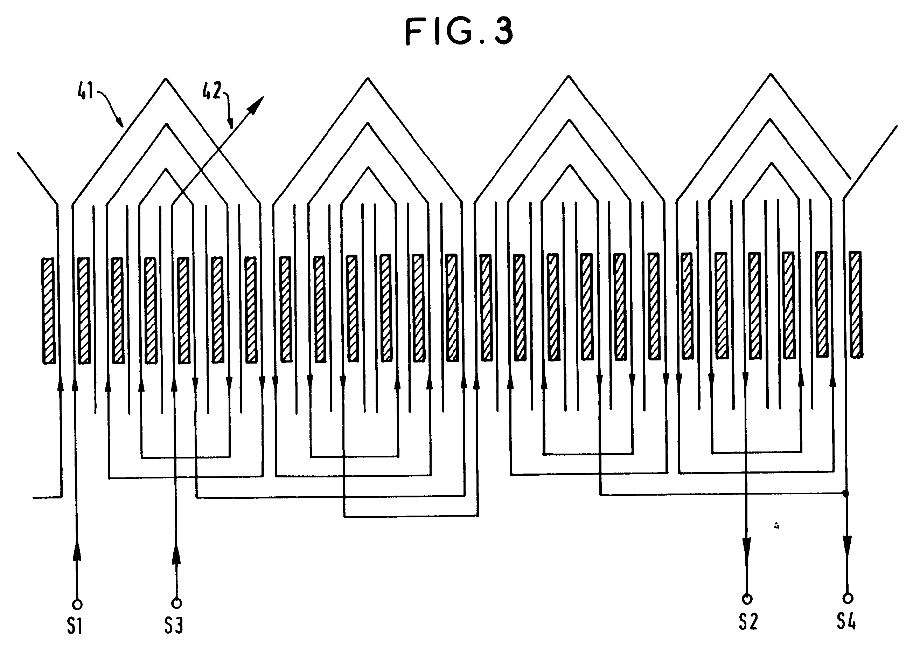

La couronne statorique 22 est munie d'un enroulement diphasé, le nombre de conducteurs d'une même phase étant réalisée de manière à ce que le nombre de conducteurs d'une même phase varie dans les encoches de la manière la plus sinusoïdale possible. De la sorte, la tension qui est induite par le bobinage d'excitation et par la rotation du rotor est de forme sinusoïdale exempte d'harmonique (figure 3).

Dans l'exemple décrit, un premier bobinage 41, dont les extrémités sont désignées par s1-s2, comprend 71 spires pour le pas 1 à 7, 123 spires pour le pas 2 à 6 et 71 spires pour le pas 3 à 5. Le stator comprend un second bobinage 42 d'extrémités s3-s4, identique au bobinage 41 mais décalé de 90 degrés électriques de manière à obtenir une tension induite en quadrature avec celle induite dans le bobinage 41.

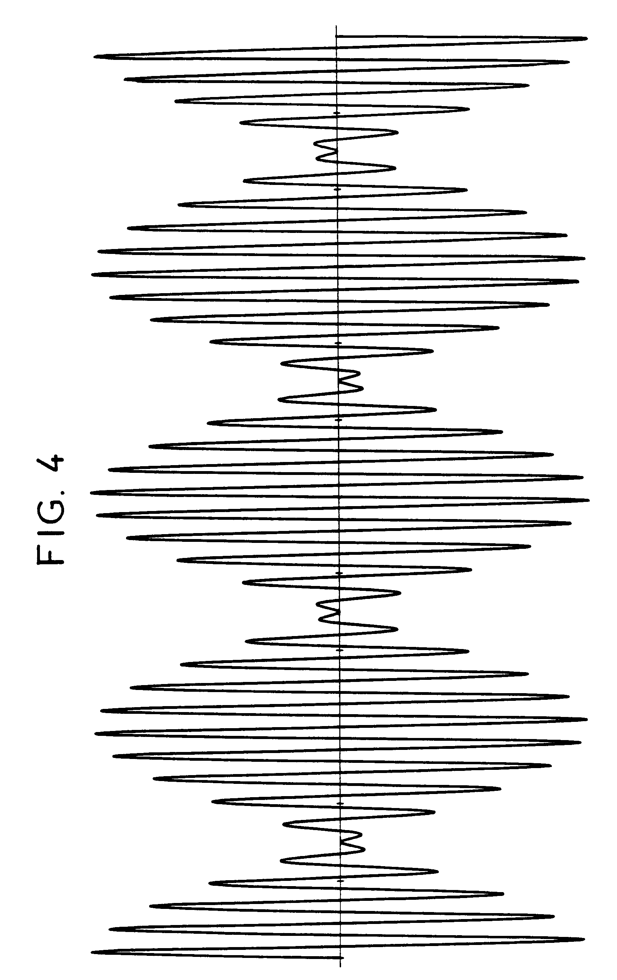

Les bobinages 41 et 42 forment deux phases décalées de 90 degrés électriques et le signal aux bornes d'une de ces phases, représenté dans la figure 4, possède une enveloppe qui représente, à un déphasage constant près, l'image de la position du rotor par rapport au stator.

L'invention n'est pas limité à l'exemple qui vient d'être décrit.

En particulier, on choisira le nombre de pôles et le nombre des spires des bobinages statoriques pour obtenir la meilleure précision et la meilleure sensibilité.

Dans une variante de réalisation, l'enroulement statorique comprend trois bobinages décalés de 120 degrés électriques définissant un capteur triphasé.

L'invention s'applique à la réalisation de capteurs de pilotage pour toutes dimensions de moteurs, en particulier pour les petits moteurs.

En outre, le capteur peut être utilisé dans un moteur à rotor noyé dans un liquide hydraulique, le rotor du capteur étant noyé avec le rotor du moteur.

## Revendications

1. Capteur réluctant homopolaire caractérisé en ce qu'il comprend un rotor en matériau magnétique comprenant un corps (10) cylindrique 12 muni à une première extrémité d'une partie feuilletée (13) comprenant autant de lobes (13A, 13B) qu'il y a de paires de pôles au capteur, et à une seconde extrémité d'une couronne (14), et un stator (20) en matériau magnétique comprenant une portion cylindrique (21) muni d'un bobinage d'excitation (35) alimentée par une tension ou un courant alternatif, le stator comprenant en outre une première couronne (22), munie d'encoches (23), ladite première couronne définissant avec ladite partie feuilletée (13) un premier entrefer (31), le stator comprenant une seconde couronne lisse (24) définissant avec la couronne rotorique (14) un second entrefer (32), les encoches statoriques (23) étant munies d'un enroulement choisi pour que la tension qui y est induite soit sinusoïdale et exempte d'harmoniques, l'enveloppe de cette tension représentant, à un déphasage près, l'image de la position du rotor par rapport au stator.

2. Capteur selon la revendication 1, caractérisé en ce que l'enroulement statorique comprend deux bobinages (41, 42), décalés de 90 degrés électriques réalisant un capteur diphasé.

3. Capteur selon la revendication 1, caractérisé en ce que l'enroulement statorique comprend trois bobinages décalés de 120 degrés électriques définissant un capteur triphasé.

4. Capteur selon l'une des revendications 1 à 3, caractérisé en ce que le bobinage d'excitation (35) est alimenté par une tension sinusoïdale de fréquence comprise entre 1 et 20 kHz.

## Patentansprüche

1. Homopolare Reluktanzsonde, dadurch gekennzeichnet, daß sie einerseits einen Rotor aus magnetischem Material mit einem zylindrischen Körper (10), an dessen erstem Ende ein Blechpaket (13) mit ebensovielen Keulen (13A, 13B) angebracht ist, wie es Polpaare an der Sonde gibt, und an dessen zweitem Ende ein Kranz (14) angebracht ist, und andererseits einen Stator (20) aus magnetischem Material mit einem zylindrischen Teil (21) enthält, der eine mit Wechselspannung oder Wechselstrom gespeiste Erregerspule (35) trägt, wobei der Stator weiter einen ersten Kranz (22) mit Nuten (23) trägt und der erste Kranz mit dem Blechpaket (13) einen ersten Magnetspalt (31) bildet, während der Stator einen zweiten glatten Kranz (24) aufweist, der mit dem rotorseitigen Kranz (14) einen zweiten Magnetspalt (32) bildet, wobei die statorseitigen Nuten (23) eine Wicklung tragen, die so gewählt ist, daß die dort induzierte Spannung sinusförmig und frei von Oberwellen ist und daß die Hüllkurve dieser Spannung bis auf eine Phasenverschiebung ein Bild der Lage des Rotors bezüglich des Stators darstellt.

2. Sonde nach Anspruch 1, dadurch gekennzeichnet, daß die statorseitige Wicklung zwei um 90° el. verschobene Spulen (41, 42) enthält, die eine Zweiphasensonde ergeben.

3. Sonde nach Anspruch 1, dadurch gekennzeichnet, daß die statorseitige Wicklung drei um 120° el. verschobene Spulen enthält, die eine Dreiphasensonde ergeben.

4. Sonde nach einem der Ansprüche 1 bis 3, dadurch gekennzeichnet, daß die Erregerspule (35) mit einer sinusförmigen Spannung einer Frequenz zwischen 1 und 20 kHz gespeist wird.

## Claims

1. Homopolar reluctant sensor characterised in that it comprises a magnetic material rotor including a cylindrical body (10) 12 having at a first end a laminated part (13) comprising the same number of lobes (13A, 13B) as there are sensor pole pairs and at a second end a ring (14), and a magnetic material stator (20) comprising a cylindrical portion (21) provided with an excitation coil (35) energised by an alternating current voltage or by an alternating current, the stator further comprising a first ring (22) having notches (23) and defining with said laminated part (13) a first airgap (31), the stator comprising a smooth second ring (24) defining with the rotor ring (14) a second airgap (32), the stator notches being provided with a winding such that the voltage induced therein is sinusoidal and free of harmonics, the envelope of said voltage representing, apart from a phase-shift, the position of the rotor relative to the stator.

2. Sensor according to claim 1 characterised in that the stator winding comprises two coils (41, 42) offset by 90 electrical degrees providing a two-phase sensor.

3. Sensor according to claim 1 characterised in that the stator winding comprises three coils offset by 120 electrical degrees providing a three-phase sensor.

4. Sensor according to any one of claims 1 to 3 characterised in that the excitation coil (35) is energised by a sinusoidal voltage at a frequency between 1 kHz and 20 kHz.
